# EUROPÄISCHE PATENTANMELDUNG

(11) **EP 0 952 070 A2**
(43) Veröffentlichungstag der Anmeldung: **27.10.1999**
(21) Anmeldenummer: 99107542.5
(22) Anmeldetag: 15.04.1999
(51) Int. Cl.: B62D 43/04, B60P 3/36, B60R 15/00

(54) **Tragvorrichtung für Funktionsteile**

(30) Priorität: 22.04.1998 DE 29807204 U
(71) Anmelder: AL-KO KOBER AG, D-89359 Kötz (DE)
(72) Erfinder: Wöhrle, Rudolf, 89335 Ichenhausen-Rieden (DE); Werdich, Anton, 89346 Bibertal-Anhofen (DE); Lamoret, Christian, 89364 Rettenbach (DE)
(74) Vertreter: Ernicke, Klaus Stefan

(57) **Zusammenfassung**

Die Erfindung betrifft eine Tragvorrichtung (1) für ein oder mehrere Funktionsteile (7,8), insbesondere einen Abwassertank (7) und ein Ersatzrad (8), im Bodenbereich von Fahrzeugen oder Fahrzeuganhängern. Die Tragvorrichtung (1) ist mittels einer mehrseitigen Befestigungsvorrichtung (12) an verschiedenen Stellen und an mehreren Seiten eines Fahrgestells (2) oder eines Aufbaus (6) lösbar befestigt. Die Tragvorrichtung (1) hat ein teleskopierbares Tragprofil (9) mit Befestigungsvorrichtungen (12) an beiden Enden.

## Beschreibung

Die Erfindung betrifft eine Tragvorrichtung für mindestens ein Funktionsteil im Bodenbereich von Fahrzeugen oder Fahrzeuganhängern mit den Merkmalen im Oberbegriff des Hauptanspruchs.

Eine solche Tragvorrichtung für Fahrzeuganhänger, insbesondere für Wohnwagen, ist aus der Praxis bekannt. Sie ist am Fahrgestell mit dem einen Ende drehbar gelagert und mit dem anderen Ende lösbar eingehängt. Die Tragvorrichtung kann zum Abnehmen des Funktionsteils abgeschwenkt und teleskopartig unter dem Fahrgestell herausgezogen werden. Die bekannte Tragvorrichtung nimmt nur ein Funktionsteil, beispielsweise einen Abwassertank, ein Ersatzrad oder dergleichen auf. Sind mehrere solche Funktionsteile vorhanden, wie das z.B. bei einem Wohnwagenanhänger der Fall ist, sind mehrere Tragvorrichtungen vorhanden. Dies bedingt einen erhöhten Platz- und Bauaufwand.

Es ist Aufgabe der vorliegenden Erfindung, eine bessere und universell einsetzbarere Tragvorrichtung aufzuzeigen.

Die Erfindung löst diese Aufgabe mit den Merkmalen im Hauptanspruch.
Die erfindungsgemäße Tragvorrichtung hat den Vorteil, daß sie zwei oder mehr Funktionsteile aufnehmen kann. Dadurch wird der zur Verfügung stehende Raum im Bodenbereich von Fahrzeugen oder Fahrzeuganhängern besser ausgenutzt. Außerdem besitzt die erfindungsgemäße Tragvorrichtung eine mehrseitige Befestigungsvorrichtung, die eine lösbare Befestigung und Bedienung von mehreren Seiten des Fahrgestells oder Aufbaus ermöglicht. Dadurch kann der Bediener leichter an die nebeneinander auf der Tragvorrichtung angeordneten Funktionsteile gelangen. Außerdem ist die Bedienung bequemer und bietet Vorteile bei beengten Platzverhältnissen. Durch die mehrseitige Bedienungsmöglichkeit muß nicht unbedingt ein umlaufender Freiraum am Fahrzeug oder Fahrzeuganhänger vorhanden sein.

Die erfindungsgemäße Tragvorrichtung ist besonders für die Unterbringung von einem Abwassertank und einem Ersatzrad an einem Fahrzeug oder Fahrzeuganhänger, insbesondere einem Wohnmobil oder einem Wohnwagenanhänger, geeignet. Sie kann aber auch bei entsprechender Ausbildung beliebige andere und beliebig viele Funktionsteile aufnehmen. Vorzugsweise läßt es sich nach zwei Seiten lösen und abschwenken. Im Heckbereich z.B. ist es aber auch möglich, eine dreiseitige Befestigung und Bedienung vorzusehen.

Die erfindungsgemäße Tragvorrichtung hat im weiteren den Vorteil, daß sie gegenüber den vorbekannten Konstruktionen einen wesentlich verringerten Bauaufwand mit sich bringt und dementsprechend kostengünstiger ist. Durch eine besondere teleskopierbare Ausbildung ist zudem eine bequeme und sichere Bedienung und Führung der Tragvorrichtungsteile gewährleistet.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen
- Figur 1:: eine Stirnansicht vom Bodenbereich eines Fahrzeuganhängers mit einer Drahtvorrichtung in abgeschwenkter Entnahmestellung,
- Figur 2:: eine vergrößerte Seitenansicht der Tragvorrichtung von Figur 1,
- Figur 3:: eine geklappte Draufsicht auf die Tragvorrichtung von Figur 2 und
- Figur 4: : einen Querschnitt durch die Tragvorrichtung entsprechend Schnittlinie IV-IV von Figur 2.

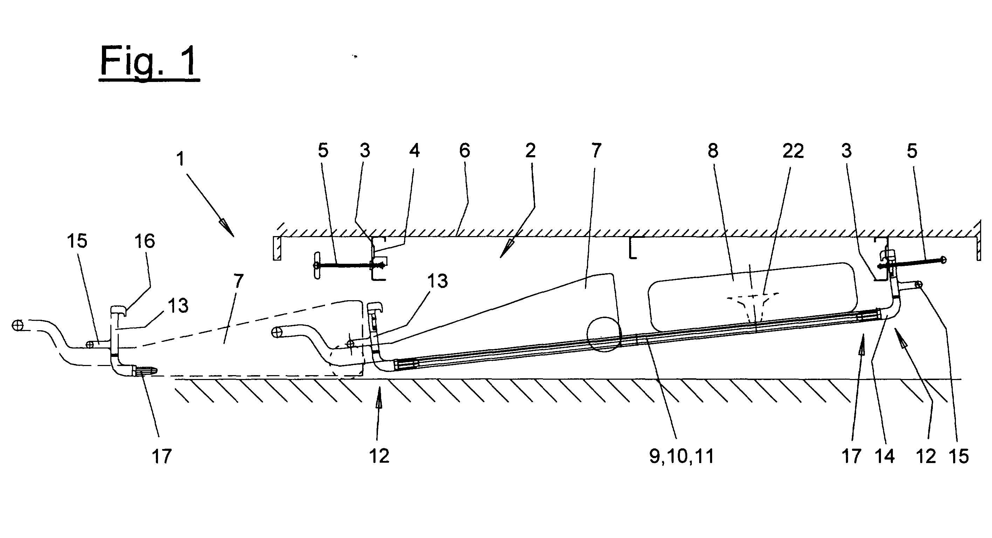

Figur 1 zeigt in einer abgebrochenen Stirnansicht eine Tragvorrichtung (1) für mehrere Funktionsteile (7,8) im Bodenbereich von einem Fahrzeug oder Fahrzeuganhänger. Im gezeigten Ausführungsbeispiel handelt es sich beispielsweise um einen Wohnwagenanhänger, der ein Fahrgestell (2) besitzt, von dem der Übersicht halber lediglich die beiden Längsträger (3) im Querschnitt dargestellt sind. Vom Aufbau (6) des Fahrzeuganhängers ist lediglich der Boden zu sehen. Die Anhängerdeichsel, die Achsanordnung und die anderen Teile des Fahrzeuganhängers sind der Übersicht halber nicht dargestellt.

In Abwandlung vom gezeigten Ausführungsbeispiel von Figur 1 kann es sich statt um einen Fahrzeuganhänger auch um ein motorbetriebenes Fahrzeug, z.B. ein Wohnmobil oder dergleichen handeln.

Die Tragvorrichtung (1) nimmt mehrere Funktionsteile (7,8) auf. Dies sind im gezeigten Ausführungsbeispiel ein Abwassertank (7) und ein Ersatzrad (8). Alternativ oder zusätzlich können auch anderen Funktionsteile, wie eine Werkzeugkiste, ein Frischwassertank, ein Gastank oder dergleichen vorhanden sein. Die Tragvorrichtung (1) bietet eine Aufnahmemöglichkeit für zwei oder mehr solche Funktionsteile (7,8). Sie kann im Betrieb mit allen aufnehmbaren Funktionsteilen (7,8) oder mit einer geringeren Zahl solcher Teile beladen sein. Beispielsweise kann in Abweichung vom vorgesehenen Einsatzzweck die Tragvorrichtung (1) nur mit dem Abwassertank (7) beladen sein und das Ersatzrad (8) wird weggelassen. Dies liegt im Belieben des Bedieners bzw. Fahrzeugausrüsters. Die Tragvorrichtung (1) bietet jedenfalls die potentielle Aufnahme- bzw. Belademöglichkeit für zwei oder mehr Funktionsteile (7,8).

Die Tragvorrichtung (1) kann wie im gezeigten Ausführungsbeispiel von Figur 1 am Fahrgestell (2) lösbar befestigt werden. Sie kann alternativ aber auch am Aufbau (6) und dort befindlichen geeigneten Beschlägen lösbar befestigt werden. Die Tragvorrichtung (1) besitzt eine mehrseitige Befestigungsvorrichtung (12), die eine lösbare Befestigung an mehreren Seiten des Fahrgestells (2) oder Aufbaus (6) ermöglicht. Im gezeigten Ausführungsbeispiel von Figur 1 ist eine zweiseitige Befestigungsvorrichtung (12) vorhanden. Dies ermöglicht eine Bedienung der Tragvorrichtung (1) von beiden Längsseiten des Fahrzeugs oder Fahrzeuganhängers.

In der Ruheposition bzw. in der Betriebsstellung des Fahrzeugs oder Fahrzeuganhängers hängt die Tragvorrichtung (1) am Fahrgestell (2) oder Aufbau (6) und bietet nach unten genügend Freiraum für den Fahrbetrieb und zum Manövrieren des Fahrzeugs oder Fahrzeuganhängers.

Figur 1 zeigt die Entnahmestellung. In dieser Position ist die Befestigungsvorrichtung (12) an einer Seite gelöst und bleibt an der anderen Seite mit dem Fahrgestell (2) bzw. Aufbau (6) verbunden. An dieser Stelle besteht vorzugsweise eine Drehlagerung. Zur Entnahme des oder der Funktionsteile (7,8) kann die Tragvorrichtung (1) in der gezeigten Weise abgeschwenkt und außerdem telekopartig ausgezogen werden. Figur 1 verdeutlicht dies bei der Abnahme des Abwassertanks (7). Mit durchgezogenen Strichen ist die Ruhe- oder Fahrtposition auf der Tragvorrichtung (1) und mit gestrichelten Linien die Entnahmeposition dargestellt.

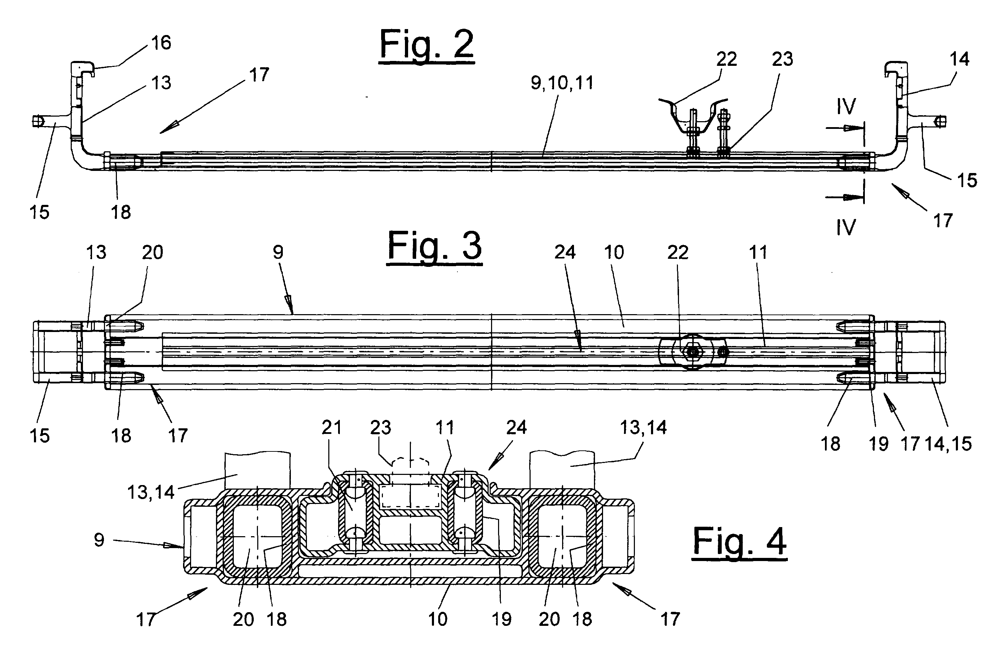

Figur 2 bis 4 verdeutlichen die Einzelheiten der Tragvorrichtung (1). Sie besteht aus einem Tragprofil (9) und der Befestigungsvorrichtung (12), welche im gezeigten Ausführungsbeispiel zwei an den Enden des Tragprofils (9) angeordnete Einhängebügel (13,14) aufweisen. Mit diesen Einhängebügeln (13,14) kann die Tragvorrichtung (1) am Fahrgestell (2) bzw. Aufbau (6) eingehängt und gelagert werden. Die Teile der Tragvorrichtung (1) bestehen vorzugsweise aus Metall, insbesondere Leichtmetall. Sie können alternativ auch aus einem anderen geeigneten Werkstoff, z.B. Kunststoff, oder aus Materialkombinationen hergestellt sein.

Das Tragprofil (9) besteht aus einem vorzugsweise außenliegenden Führungsprofil (10), in dem eine vorzugsweise innenliegende Tragschiene (11) längsbeweglich gelagert ist. Figur 4 zeigt diese Anordnung im Querschnitt. Die Tragschiene (11) ist beispielsweise in einer Art Schwalbenschwanzführung im Führungsprofil (10) geführt und ragt durch einen Mittelschlitz (24) aus dem Führungsprofil (10) heraus. Zwischen dem Führungsprofil (10) und der Tragschiene (11) kann eine einfache Gleitlagerung bestehen. Alternativ kann auch eine Wälzlagerung vorhanden sein. Ferner ist es möglich, die Gleitlagerung mit kleinen Lagerrollen am innenliegenden Ende der Tragschiene (11) zu ergänzen, die das Einführen und Gleiten im Führungsprofil (10) erleichtern.

Das Führungsprofil (10) kann an den Seiten Öffnungen in Form einer Lochreihe oder eines Seitenschlitzes aufweisen. Außerdem bieten das Führungsprofil (10) und die Tragschiene (11) jeweils zwei mittensymmetrisch und mit Distanz voneinander angeordnete rohrartige durchgehende Kanäle, die an den Profilenden Führungsöffnungen (20) bzw. Verbindungsöffnungen (21) bilden. Wie Figur 3 verdeutlicht, kann die Tragschiene (11) kürzer als das Führungsprofil (10) sein.

Auf der Tragschiene (11) kann eines der Funktionsteile, z.B. das Ersatzrad (8) befestigt oder gelagert werden. Im gezeigten Ausführungsbeispiel ist hierfür ein Radhalter (22) vorhanden, der die Radfelge gegen die aus dem Schlitz (24) nach oben vorragende Tragschiene (11) spannt. Die Tragschiene (11) kann hierfür ebenfalls einen Mittelschlitz besitzen, in dem eine Kulisse (23) zur axialen Verstellung des Radhalters (22) geführt ist. Dadurch kann der Radhalter (22) in beliebiger Weise längs der Tragschiene (11) positioniert und festgespannt werden.

Der Abwassertank (7) ist auf dem Führungsprofil (10) gelagert. Dies kann in beliebig geeigneter Weise geschehen. Beispielsweise besitzt der Abwassertank (7) an der Unterseite eine mittige und im wesentlichen U-förmige Ausnehmung, die an das Führungsprofil (10) angepaßt ist. Hierüber wird der Abwassertank (7) gleitend auf dem Führungsprofil (10) geführt.

Das teleskopierbare Tragprofil (9) ist an beiden Enden mit der Befestigungsvorrichtung (12) zumindest in Ruhestellung verbunden. Hierfür gibt es verschiedene Möglichkeiten.

Am einen Ende der Tragvorrichtung (1) ist der Einhängebügel (14) mit der Tragschiene (11) starr verbunden. Auf der anderen Seite ist der Einhängebügel (13) mit dem Abwassertank (7) starr verbunden. Beide Einhängebügel (13,14) können über eine Steckverbindung (17) in Ruhestellung formschlüssig mit dem Tragprofil (9), insbesondere dem Führungsprofil (10) formschlüssig verbunden werden.

Beide Einhängebügel (13,14) haben im gezeigten Ausführungsbeispiel im wesentlichen die gleiche Ausbildung und lassen sich entsprechend universell einsetzen. Sie besitzen ein vertikales Wandteil mit einem nach außen quer abstehenden Griff (15). Am oberen Ende des Wandteils können ein oder mehrere einwärts gerichtete Einhängenasen (16) vorhanden sein. In der gezeigten Ausführungsform ist das Wandteil im oberen Bereich gabelförmig ausgebildet und besitzt zwei mit Abstand nebeneinander angeordnete Einhängenasen (16). Diese greifen zur Befestigung am Fahrgestell (2) in eine dortige Einhängeöffnung (4). In dieser Position kann über einen geeigneten Verschluß (5) eine Verriegelung erfolgen. Der Verschluß (5) ist dazu beispielsweise als Drehknebel ausgebildet, der mit einem drehbaren Sperrelement in den Freiraum des gabelförmigen Wandoberteils greift.

Die im Querschnitt L-förmigen Einhängebügel (13,14) besitzen an ihren unteren horizontalen Wandteil zwei größere mit Abstand voneinander angeordnete Führungszapfen (18) und zwei dazwischen liegende ebenfalls parallele und zueinander beabstandete Verbindungszapfen (19). Die Führungszapfen (18) greifen zur Bildung der Steckverbindung (17) in die Führungsöffnungen (20) des Führungsprofils (10) und stellen in dieser Eingriffsstellung die besagte formschlüssige Verbindung her. Die Steckverbindung (17) ist an beiden Seiten allerdings lösbar.

Die Verbindungszapfen (19) greifen beim rechten Einhängebügel (14) in die Verbindungsöffnungen (21) der Tragschiene (11) und sind dort in geeigneter Weise befestigt, z.B. durch die in Figur 4 dargestellten Niete. Hierdurch ist der Einhängebügel (14) starr mit der Tragschiene (11) verbunden. Wenn in Abwandlung zu Figur 1 der Einhängebügel (14) vom Fahrgestell (2) gelöst und die Tragvorrichtung (1) auf der rechten Seite abgeschwenkt wird, kann über den Griff (15) der Einhängebügel (14) mit der Tragschiene (11) und dem Ersatzrad (8) aus dem Führungsprofil (10) teleskopartig herausgezogen werden.

Der andere Einhängebügel (13) ist in beliebig geeigneter Weise mit der Stirnseite des Abwassertanks (7) verbunden. Die beiden Verbindungszapfen (19) können hierbei ohne Funktion sein. Die Führungszapfen (18) dienen zur formschlüssigen Ankopplung und Verbindung des Einhängebügels (13) mit dem Abwassertank (7) am Führungsprofil (10).

Figur 1 verdeutlicht die Entnahmestellung mit abgeschwenkter Tragvorrichtung (1). Das Tragprofil (9) ist über den rechten Einhängebügel (14) am Fahrgestell (2) eingehängt, wobei an der Einhängestelle mittels der Einhängenasen (16) eine Drehlagerung gebildet wird. Der andere Einhängebügel (13) ist nach Öffnen des Verschlusses (5) vom Fahrgestell (2) gelöst und abgeschwenkt worden. Der Abwassertank (7) kann einen eigenen Griff besitzen. An diesem oder am Griff (15) des Einhängebügels (13) kann in der gezeigten Entnahmestellung der Abwassertank (7) unter dem Fahrzeug oder Fahrzeuganhänger seitlich herausgezogen werden. Die Steckverbindung (17) wird gelöst, wobei der Abwassertank (7) auf dem Tragprofil (9) gleitet. Der Abwassertank (7) kann am rückwärtigen Ende seitliche Räder für einen Rolltransport besitzen.

Zum Beladen wird der Abwassertank (7) wieder auf das Tragprofil (9) geschoben, bis die Steckverbindung (17) wieder geschlossen ist. Die Tragvorrichtung (1) kann dann hochgeschwenkt und der Einhängebügel (13) wieder am Fahrgestell (2) befestigt werden.

Auf der anderen Seite kann die Tragschiene (11) je nach gewünschter Ausgestaltung vollständig oder nur zum Teil aus dem Führungsprofil (10) herausgezogen werden. Gegebenenfalls ist eine Auszugsbegrenzung vorhanden. Zum Beladen wird die Tragschiene (11) wieder entsprechend eingeführt und die Steckverbindung (17) geschlossen.

Abwandlungen der gezeigten Ausführungsform sind in verschiedener Weise möglich. Beispielsweise kann die Befestigungsvorrichtung (12) von drei Seiten bedient werden, indem sie z.B. heckseitig an einem Querträger des Fahrgestells (2) einen dritten lösbaren Befestigungspunkt hat. Sie läßt sich dann nach drei Seiten bedienen und abschwenken. Daneben sind auch weitere Abwandlungen möglich. Statt der gezeigten Einhängemöglichkeit und Drehlagerung mittels Einhängebügeln (13,14) kann die Befestigungsvorrichtung (12) in beliebig anderer Weise ausgebildet sein. Beliebig variabel ist auch die Gestaltung des teleskopierbaren Tragprofils (9), das auch aus mehr als zwei Teilen bestehen kann. Außerdem kann bei einer dreiseitigen Bedienung ein quer abziehbares Teil vorhanden sein. Variabel sind auch die Befestigungsmöglichkeiten der Funktionsteile (7,8) auf den Teilen des Tragprofils (9). Desgleichen kann auch die Gestaltung der teleskopartigen Ausziehmöglichkeit und der Verbindung der Funktionsteile (7,8) mit den entsprechenden Teilen der Befestigungsvorrichtung (12) verändert werden.

### BEZUGSZEICHENLISTE

- 1: Tragvorrichtung
- 2: Fahrgestell
- 3: Längsträger
- 4: Einhängeöffnung
- 5: Verschluß
- 6: Aufbau, Boden
- 7: Funktionsteil, Abwassertank
- 8: Funktionsteil, Ersatzrad
- 9: Tragprofil
- 10: Führungsprofil
- 11: Tragschiene
- 12: Befestigungsvorrichtung
- 13: Einhängebügel
- 14: Einhängebügel
- 15: Griff
- 16: Einhängenase
- 17: Steckverbindung
- 18: Führungszapfen
- 19: Verbindungszapfen
- 20: Führungsöffnung
- 21: Verbindungsöffnung
- 22: Radhalter
- 23: Kulisse
- 24: Schlitz

## Patentansprüche

1. Tragvorrichtung für mindestens ein Funktionsteil im Bodenbereich von Fahrzeugen oder Fahrzeuganhängern, wobei die Tragvorrichtung lösbar am Fahrgestell oder am Aufbau befestigbar und ausziehbar ausgebildet ist, dadurch **gekennzeichnet**, daß die Tragvorrichtung (1) mehrere Funktionsteile (7,8) aufnimmt und eine mehrseitige Befestigungsvorrichtung (12) zur lösbaren Befestigung an mehreren Seiten des Fahrgestells (2) oder Aufbaus (6) aufweist.

2. Tragvorrichtung nach Anspruch 1, dadurch **gekennzeichnet**, daß die Tragvorrichtung (1) einen Abwassertank (7) und ein Ersatzrad (8) aufnimmt.

3. Tragvorrichtung nach Anspruch 1 oder 2, dadurch **gekennzeichnet**, daß die Tragvorrichtung (1) ein teleskopierbares Tragprofil (9) mit einer Befestigungsvorrichtung (12) an beiden Enden aufweist.

4. Tragvorrichtung nach Anspruch 3, dadurch **gekennzeichnet**, daß das Tragprofil (9) ein Führungsprofil (10) und eine daran ausziehbar gelagerte Tragschiene (11) aufweist.

5. Tragvorrichtung nach einem der Ansprüche 1 bis 4, dadurch **gekennzeichnet**, daß der Ersatztank (7) auf dem Tragprofil (9) gleitend mit Formschluß geführt ist.

6. Tragvorrichtung nach einem der Ansprüche 1 bis 5, dadurch **gekennzeichnet**, daß das Ersatzrad (8) auf der Tragschiene (11) mit einem verstellbaren Radhalter (22) befestigbar ist.

7. Tragvorrichtung nach einem der Ansprüche 1 bis 6, dadurch **gekennzeichnet**, daß die Befestigungsvorrichtung (12) mehrere Einhängebügel (13,14) mit einem Griff (15) aufweist, die jeweils mit einem Funktionsteil (7,8) fest verbunden und über eine formschlüssige Steckverbindung (17) lösbar mit dem Tragprofil (9) verbindbar sind.

8. Tragvorrichtung nach Anspruch 7, dadurch **gekennzeichnet**, daß der eine Einhängebügel (13) starr mit dem Abwassertank (7) verbunden ist.

9. Tragvorrichtung nach Anspruch 7 oder 8, dadurch **gekennzeichnet**, daß der andere Einhängebügel (14) mit der Tragschiene (11) für das Ersatzrad (8) starr verbunden ist.

10. Tragvorrichtung nach Anspruch 7, 8 oder 9, dadurch **gekennzeichnet**, daß die Steckverbindung (17) zwei Führungszapfen (18) aufweist, die in Führungsöffnungen (20) am Ende des Führungsprofils (10) greifen.

11. Tragvorrichtung nach einem der Ansprüche 7 bis 10, dadurch **gekennzeichnet**, daß der Einhängebügel (13,14) ein oder mehrere Eingängenasen (15) aufweist.

12. Tragvorrichtung nach einem der Ansprüche 1 bis 11, dadurch **gekennzeichnet**, daß die Befestigungsvorrichtung (12) mehrere Verschlüsse (5) zur Verriegelung des Eingriffs am Fahrgestell (2) oder am Aufbau (6) aufweist.

13. Tragvorrichtung nach einem der Ansprüche 1 bis 12, dadurch **gekennzeichnet,** daß die Befestigungsvorrichtung (12) lösbare Drehlagerungen am Fahrgestell (2) oder Aufbau (6) bildet.
